Europäisches Patentamt

European Patent Office

Office européen des brevets

(19)

(11) Veröffentlichungsnummer: **0 403 762**
**A1**

## (12) EUROPÄISCHE PATENTANMELDUNG

(21) Anmeldenummer: **90107856.8**

(22) Anmeldetag: **25.04.90**

(51) Int. Cl.⁵: **B60N 2/28**

(30) Priorität: **22.06.89 DE 8907649 U**

(43) Veröffentlichungstag der Anmeldung:
**27.12.90 Patentblatt 90/52**

(84) Benannte Vertragsstaaten:
**DE IT**

(71) Anmelder: **PEG Perego Pines S.p.A.**
**Via De Gasperi, 50**
**20043 Arcore (Milano)(IT)**

(72) Erfinder: **Perego, Gianlucca, Dr.**
**Via de Gasperi 50**
**I-20042 Arcore(IT)**

(74) Vertreter: **Patentanwälte Grünecker,**
**Kinkeldey, Stockmair & Partner**
**Maximilianstrasse 58**
**D-8000 München 22(DE)**

(54) **Sicherheitsbehältnis für Kleinkinder.**

(57) Sicherheitsbehältnis zur Unterbringung von Kleinkindern in einem Kraftfahrzeug, welches einen wannenartig gestalteten Tragkörper (10) aus Kunststoff mit stoßaufnehmenden Seitenwänden aufweist, die das Kleinkind mit geringem Spielraum umgeben, wobei der Tragkörper (10) einstückig aus Hartschaum ausgebildet ist.

**FIG. 5**

EP 0 403 762 A1

## Sicherheitsbehältnis für Kleinkinder

Die Erfindung bezieht sich auf ein Sicherheitsbehältnis für Kleinkinder, welches geeignet ist, ein Kleinkind während des Transportes in einem Kraftfahrzeug aufzunehmen.

Kleinkinder, die in einem Fahrzeug transportiert werden, sind bei Unfällen in besonderem Maße gefährdet. Da dieser Gefährdung mit den im Kraftfahrzeug üblicherweise vorhandenen Sicherheitsgurten nicht begegnet werden kann, wurden in der Vergangenheit eine Vielzahl von möglichen Behältnissen vorgeschlagen, die den Transport eines Kleinkindes in einem Kraftfahrzeug sicherer gestalten sollen.

Bei der Konzeption derartiger Sicherheitsbehältnisse müssen sich zum Teil widersprechende Bedürfnisse erfüllt werden. So muß das Kleinkind in dem Behältnis möglichst fest gehalten werden, damit bei einer plötzlichen Verzögerung des Fahrzeuges und den dadurch auftretenden Beschleunigungsdifferenzen keine größeren Bewegungsräume zur Verfügung stehen, die zu einer größeren Geschwindigkeitsdifferenz und damit zu einem hohen Stoßimpuls führen, durch den Verletzungen des Kleinkindes entstehen können. Auf der anderen Seite darf der Bewegungsspielraum des Kleinkindes nicht zu sehr beeinträchtigt werden, um den notwendigen Komfort sicherzustellen, und es müssen selbstverständlich auch orthopädische Gesichtspunkte berücksichtigt werden.

Ein Sicherheitsbehältnis zum Transport von Kleinkindern ist mit der DE-OS 37 24 131 bekannt geworden. Dieses Behältnis wird quer zur Fahrtrichtung auf dem Hecksitz des Kraftfahrzeuges montiert und erlaubt es, ein Kleinkind liegend zu transportieren, was orthopädisch sehr vorteilhaft ist. Das Behältnis besteht aus einem stoßaufnehmenden Kunststoff-Vollmaterial, aus Hartpappe oder aus einem Weidengeflecht und ist so gestaltet, daß Spielräume, die, wie erwähnt, zu gefährlichen Stoßbeschleunigungen führen können, vermieden werden.

Dieses bekannte Sicherheitsbehältnis erlaubt zwar ein sicheres Transportieren des Kleinkindes, ist in seiner Herstellung jedoch verhältnismäßig teuer. In diesem Zusammenhang muß berücksichtigt werden, daß derartige Sicherheitsbehältnisse üblicherweise für Säuglinge und Kleinkinder im Alter bis zu ca. zwölf Monaten verwendet werden. Aufgrund dieser kurzen Verwendungszeit spielt der Preis für eine solche Vorrichtung eine entscheidende Rolle. Erst günstige Herstellungskosten und damit auch ein günstiger Endpreis ermöglichen die umfassende Benutzung derartiger Vorrichtungen.

Der vorliegenden Erfindung liegt deshalb die Aufgabe zugrunde, ein Sicherheitsbehältnis für Kleinkinder zu schaffen, das einerseits einen sicheren und komfortablen Transport des Kleinkindes ermöglicht und das andererseits besonders kostengünstig herstellbar ist.

Diese Aufgabe wird erfindungsgemäß durch den Gegenstand des Anspruchs 1 gelöst.

Das Sicherheitsbehältnis gemäß der Erfindung hat Eigenschaften, durch die die gestellte Aufgabe in sehr vorteilhafter Weise gelöst wird. So ist der Hartschaumstoff in besonderer Weise dafür geeignet, die während einer starken Verzögerung vom Kleinkind auf die Schale übertragene Energie aufzunehmen, sich dabei zu verformen und somit Verletzungen des Kindes zu vermeiden.

Die Verwendung von einem geschäumten Kunststoff zur Stoßaufnahme in derartigen Behältnissen, ist zwar bereits durch die DE-OS 38 27 309 vorgeschlagen worden. In dem dort gezeigten Fall besteht der Hartschaumkörper jedoch aus einem ovalen Ring, der in eine Kunststoffschale aus Hart-PVC, Pappe oder dgl. eingelegt wird. Die Verwendung einer selbsttragenden Schale, die nur aus Hartschaum besteht, als Sicherheitsbehältnis war zum Anmeldezeitpunkt der DE-OS 38 27 309 nicht vorstellbar. Die Fachwelt war nämlich davon ausgegangen, daß ein derartiges Behältnis keine ausreichende Sicherheit aufweisen würde, um die durch die Befestigungsmittel, mit denen dass Sicherheitsbehältnis am Kraftfahrzeug befestigt ist, im allgemeinen also Gurte, bei einer starken Verzögerung auf das Behältnis wirkenden Kräfte aufzunehmen.

Tatsächlich haben nun intensive Versuche gezeigt, daß ein geeignet gestaltetes aus Hartschaum bestehendes Behältnis stabil genug ist, um den durch einen Unfall bewirkten Belastungen zu widerstehen. Damit ist die Möglichkeit geschaffen, diese Behältnisse sehr preisgünstig herzustellen, so daß auf die Benutzung nicht aus Kostengesichtspunkten verzichtet werden muß.

Das erfindungsgemäße Behältnis kann so gestaltet sein, daß es überall, d.h. sowohl im Bodenbereich als auch im Bereich der Seitenwände, eine gleiche, einheitliche Wandstärke aufweist.

Gemäß einer vorteilhaften Ausgestaltung sind die Seitenwände jedoch im Kopfbereich nach innen hin verdickt. Dadurch wird zum einen der Abstand des Kopfes zu den Seitenwänden weiter verringert und dadurch der im Falle einer Verzögerung auf den Kopf des Kleinkindes wirkende Stoßimpuls vermindert. Zum anderen wird das stoßabsorbierende Volumen des Behältnisses an dieser Stelle erhöht. Dies erhöht die Sicherheit noch weiter, denn der Kopf des Kleinkindes ist im Verhältnis zum übrigen Körper relativ schwer, d.h. daß der Stoßimpuls höher ist, und außerdem ist der Kopf beim Kleinkind gerade besonders verletzungsanfällig.

Gemäß einer weiteren vorteilhaften Ausgestaltung ist das Bodenteil des wannenartigen Behältnisses im Bereich des Kopfes des Kleinkindes derart verdickt, daß eine in Kopfrichtung leicht ansteigende Schräge entsteht. Durch diese Maßnahme wird die Festigkeit dieses Bereiches weiter erhöht und der Liegekomfort für das Kleinkind verbessert.

Gemäß einer weiteren vorteilhaften Ausgestaltung sind im Bodenbereich des wannenartigen Behältnisses eine Vielzahl von Entlüftungskanälen angeordnet. Durch diese Kanäle wird ein bei höheren Temperaturen möglicher Wärmestau zwischen dem Körper des Kleinkindes und dem Bodenteil des Behältnisses verhindert und der Liegekomfort weiter erhöht.

Gemäß einer weiteren vorteilhaften Ausgestaltung ist die Höhe der Seitenwände des Behältnisses im Fußbereich geringer als im Kopfbereich, wobei die Zunahme der Wandhöhe zwischen diesen Bereichen im wesentlichen linear ist. Diese Gestaltung bewirkt eine Verringerung des Materialaufwandes, ohne daß dadurch die Sicherheit beeinträchtigt würde, wodurch sich die Herstellungskosten weiter vermindern lassen.

Gemäß einer weiteren vorteilhaften Ausgestaltung ist ein Brusttuch vorgesehen, das z.B. mit einem Klettverschluß über der Brust des Kleinkindes geschlossen werden kann, und die Sicherheit des Kleinkindes, z.B. bei einem Überschlagen des Fahrzeuges, weiter erhöht. Die Verbindung dieses Brusttuches mit dem Sicherheitsbehältnis geschieht vorzugsweise derart, daß das Brusttuch mit zwei Bändern versehen ist, die durch Öffnungen im Bodenteil des Behältnisses geführt und dann jeweils miteinander verknotet werden. Zur Stabilisierung der Befestigung kann eine Kunststoffplatte an der Außenseite des Bodenteils des Behältnisses vorgesehen werden.

Die Innenseite des Behältnisses ist, gemäß einer weiteren vorteilhaften Ausgestaltung, teilweise oder durchgehend gepolstert, um den Komfort des Kleinkindes weiter zu erhöhen. Weiterhin kann das gesamte Behältnis mit einem Bezugsstoff versehen sein. Tragegurte können vorgesehen werden, um das Behältnis auch außerhalb des Fahrzeuges bequem transportieren zu können.

Als Ausgangsstoffe für die Herstellung kommen Polymethacrylimid, Phenol-Formaldehydharze, Harnstoffharze, Phenolharz und insbesondere auch Polyurethane in Frage.

Bei den vorstehend beschriebenen Versuchen hat es sich als besonders günstig erwiesen, einen Hartschaumkörper auf Polystyrolbasis zu verwenden. Ein solcher Hartschaumkörper kann z.B. mit Hilfe eines Rohstoffes hergestellt werden, der unter dem Handelsnamen "VESTIPOR S" von den Chemischen Werken Hüls AG in Marl bezogen werden kann.

Der Polystyrolhartschaum kann mit einer Rohdichte von 8 bis 35 kg/m³ hergestellt werden. Als besonders zu bevorzugen hat sich bei den Versuchen eine Rohdichte von ca. 30 kg/m³ für den genannten Anwendungszweck erwiesen. Neben dem Ausgangsmaterial und der Rohdichte ist auch die Wandstärke des Behältnisses von großer Bedeutung. Es hat sich gezeigt, daß die Wandstärke in allen Bereichen des Behältnisses 20 mm oder mehr betragen sollte. Für die Seitenwände ist eine Wandstärke von ca. 30 mm oder mehr zu bevorzugen, die eine hohe Sicherheit bei niedrigen Herstellungskosten bietet.

Falls eine Gestaltung gewählt wird, die eine Verdickung im Kopfbereich aufweist, ist hier als Wandstärke 40 mm zu bevorzugen.

Weitere Vorteile, Merkmale und Anwendungsmöglichkeiten der vorliegenden Erfindung ergeben sich aus den Unteransprüchen und aus der nachfolgenden Beschreibung eines Ausführungsbeispieles im Zusammenhang mit der Zeichnung. Darin zeigen:

Fig. 1 eine perspektivische Ansicht eines Ausführungsbeispiels des erfindungsgemäßen Sicherheitsbehältnisses;

Fig. 2 eine Aufsicht auf den Hartschaumkörper des Sicherheitsbehältnisses gemäß Fig. 1;

Fig. 3 einen Schnitt durch die Darstellung gemäß Fig. 2 entlang den Linien III-III;

Fig. 4 einen Schnitt durch die Darstellung gemäß Fig. 3 entlang der Linie IV-IV; und

Fig. 5 einen weiteren Längsschnitt mit der Darstellung der Befestigung eines Brusttuches

Fig. 6 einen Querschnitt des Ausführungsbeispieles gemäß Fig. 5.

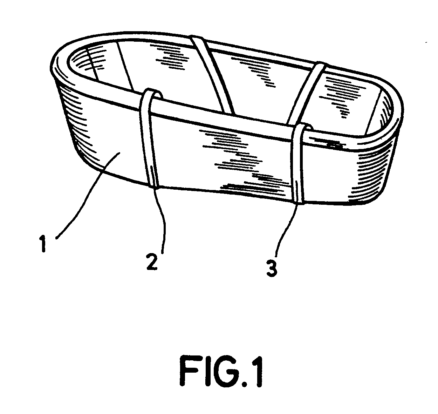

Ein Ausführungsbeispiel des Sicherheitsbehältnisses gemäß der Erfindung wird in bezug auf die Fig. 1 bis 6 beschrieben.

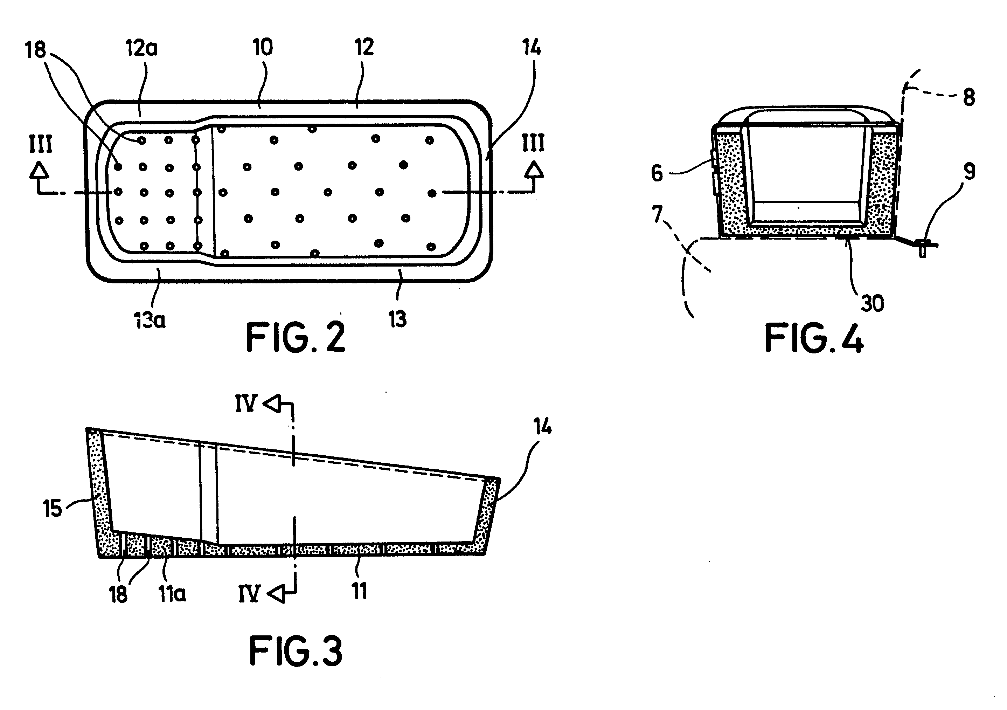

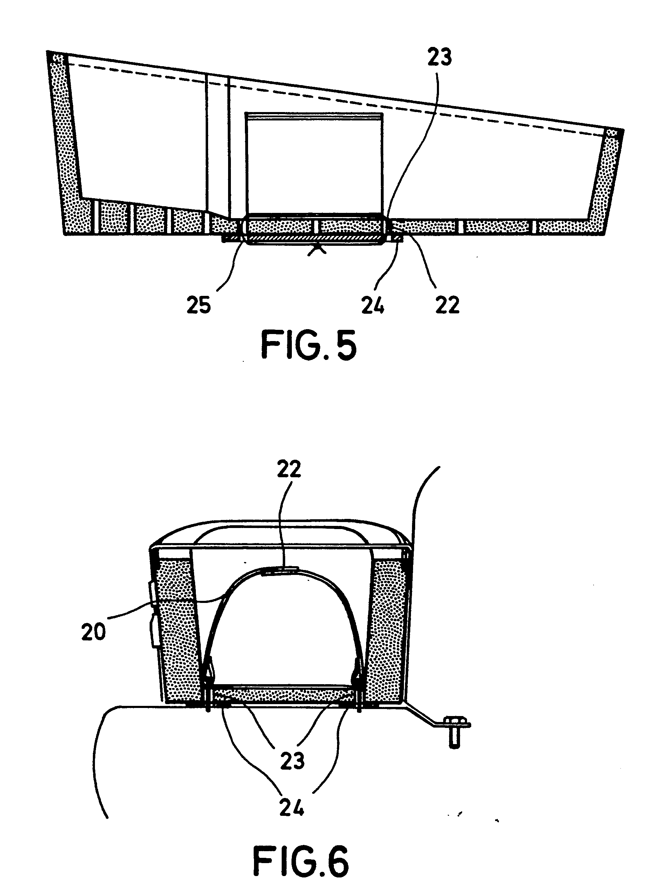

Fig. 1 zeigt das Sicherheitsbehältnis 1 im einsatzbereiten Zustand mit einem Bezug 2 und Tragegurten 3, 4. Das Behältnis ist dafür vorgesehen, quer zur Fahrtrichtung auf dem Rücksitz eines Kraftfahrzeuges befestigt zu werden. Die Befestigung geschieht mit schematisch in den Fig. 4 und 5 dargestellten Befestigungsgurten 5, die im Stand der Technik bekannt sind, und die das Sicherheitsbehältnis umschließen und durch ein Sicherheitsschloß 6, das ebenfalls schematisch in den Fig. 4 und 5 zu erkennen ist, geschlossen sind. Die Verbindung der Gurte zum Kraftfahrzeug, von dem nur schematisch der Sitz 7 und die Rücksitzlehne 8 dargestellt sind, erfolgt z.B. über eine Schraube 9, die in bekannter Weise an der Karosserie des Fahrzeuges befestigt wird.

Das Sicherheitsbehältnis weist, wie in den Fig. 2 bis 6 zu erkennen ist, einen wannenartig gestalteten Tragkörper auf, der einstückig aus Hartschaum geformt ist.

Im einzelnen weist der Hartschaumkörper 10 eine Bodenplatte 11, Seitenwände 12, 13 sowie eine hintere Querwand 14 und eine vordere Querwand 15 auf.

Das Kleinkind wird so in die Wanne eingelegt, daß der Kopf in dem Bereich angeordnet ist, der durch die vorderen Teile der Seitenwände 12a, 13a und die vordere Querwand 15 gebildet ist.

Wie insbesondere in der Fig. 3 zu erkennen ist, ist die vordere Querwand 15 deutlich höher als die hintere Querwand 14, wobei die dazwischen verlaufenden Seitenwände zwischen der hinteren Querwand und der vorderen Querwand linear ansteigen.

Im vorderen Bereich 11a der Bodenplatte ist diese keilförmig erhöht, um den Kopf des Kleinkindes abzustützen. Weiterhin weisen die Seitenwände in ihrem vorderen Bereich 12a, 13a eine nach innen gerichtete Verdickung der Wandstärke auf, die den Freiraum für den Kopf des Kleinkindes weiter begrenzt.

Die Bodenplatte 11 des Hartschaumkörpers 10 ist mit einer Vielzahl von Kanälen 18 mit rundem Querschnitt durchzogen, die die Bodenplatte in senkrechter Richtung durchdringen und für eine Belüftung des Behältnisses sorgen.

Um den Halt des Kleinkindes in dem Behältnis weiter zu verbessern, ist das gezeigte Ausführungsbeispiel mit einem sogenannten Brusttuch 20 versehen. Dieses Brusttuch besteht im wesentlichen aus einer ein- oder mehrschichtigen Textilbahn bzw. Textilgewebe und ist an beiden Enden mit Verschlußmitteln 22, z.B. einem Klettband-Verschluß versehen, mit denen diese zusammengefügt werden können.

In diese Tuchbahn 21 sind zwei Bänder 22 derart eingenäht, daß sie sich im montierten Zustand im wesentlichen parallel zu den Seitenwandungen des Behältnisses erstrecken. Die beiden Enden von jedem der Bänder 22 werden durch Durchbrechungen 23, die in der Bodenplatte des Behältnisses eingelassen sind, durchgeführt und sind an der Unterseite der Bodenplatte miteinander verknotet. Um die Festigkeit der Bodenplatte in diesem Bereich zu erhöhen, können zwei rechteckige Kunststoffplatten 24 vorgesehen werden, die insgesamt vier Durchbrechungen 25 aufweist, die deckungsgleich mit den Durchbrechungen 23 der Bodenplatte sind.

Es soll darauf hingewiesen werden, daß die vorstehend erwähnten kanalartigen Durchbrechungen 18 an der Bodenplatte des Behältnisses so angordnet werden können, daß sie ohne weitere Änderung zum Befestigen des Brusttuches geeignet sind.

Der in dem Ausführungsbeispiel dargestellte Hartschaumkörper 10 ist auf Polystyrolbasis mit einer Rohdichte von 30 kg/m³ hergestellt. Die minimale Wandstärke 30 der Bodenplatte beträgt 20 mm, die Dicke der Seitenwände 12, 13 beträgt 30 mm. Im vorderen Bereich 12a, 13a sind die Seitenwände auf eine Dicke von 40 mm verdickt.

**Ansprüche**

1. Sicherheitsbehältnis zur Unterbringung von Kleinkindern in einem Kraftfahrzeug, welches einen wannenartig gestalteten Tragkörper aus Kunststoff mit stoßaufnehmenden Seitenwänden aufweist, die das Kleinkind mit geringem Spielraum umgeben, **dadurch gekennzeichnet,** daß der Tragkörper (10) einstückig aus Hartschaum ausgebildet ist.

2. Sicherheitsbehältnis nach Anspruch 1, **dadurch gekennzeichnet,** daß die Seitenwände (12, 13) des Tragkörpers (10) in ihrem vorderen, dem Kopf des Kleinkindes zugewandten Bereich (12a, 13a), eine nach innen hin erhöhte Wandstärke aufweisen.

3. Sicherheitsbehältnis gemäß Anspruch 1 oder 2, **dadurch gekennzeichnet,** daß die Bodenplatte (11) des Tragkörpers (10) im vorderen Bereich eine keilartig ansteigende Verdickung zur Abstützung des Kopfes des Kleinkindes aufweist.

4. Sicherheitsbehältnis gemäß mindestens einem der Ansprüche 1 bis 3, **dadurch gekennzeichnet,** daß in der Bodenplatte (11) des Tragkörpers (10) eine Vielzahl von kanalartigen Durchbrechungen (18) vorgesehen sind.

5. Sicherheitsbehältnis gemäß mindestens einem der Ansprüche 1 bis 4, **dadurch gekennzeichnet,** daß die hintere, im Fußbereich des Kleinkindes angeordnete Querwand (14) des Tragkörpers (10) eine geringere Höhe aufweist als die im Kopfbereich des Kleinkindes angeordnete vordere Querwand (15).

6. Sicherheitsbehältnis gemäß mindestens einem der Ansprüche 1 bis 5, **dadurch gekennzeichnet,** daß ein Brusttuch (20) vorgesehen ist, welches im wesentlichen aus einer Texilbahn (21) besteht, die an ihren beiden Enden mit Verschlußmitteln (22) verschließbar ist, wobei das Brusttuch mit Bändern versehen ist, welche durch in der Bodenplatte (11) angeordnete Öffnungen (23, 24) geführt, und an der Außenseite der Bodenplatte verknotet sind.

7. Sicherheitsbehältnis gemäß mindestens einem der Ansprüche 1 bis 6, **dadurch gekennzeichnet,** daß die Innenseite des Tragkörpers (10) zumindest teilweise mit einer zusätzlichen Polsterung versehen ist.

8. Sicherheitsbehältnis gemäß mindestens einem der Ansprüche 1 bis 7, **dadurch gekennzeichnet,** daß Innenseite und Außenseite des Tragkörpers (10) mit einem Bezugsstoff (3) bespannt sind.

9. Sicherheitsbehältnis gemäß mindestens einem der Ansprüche 1 bis 8, **dadurch gekennzeichnet,** daß zwei Tragegurte (3, 4) vorgesehen sind, welche um den Tragkörper (10) herumlaufend derart angeordnet sind, daß das Sicherheitsbehältnis damit in seiner Gebrauchslage getragen werden kann.

10. Sicherheitsbehältnis gemäß mindestens einem der Ansprüche 1 bis 9, **dadurch gekennzeichnet,** daß der Hartschaum des Tragkörpers (10) auf Polystyrolbasis hergestellt ist.

11. Sicherheitsbehältnis gemäß Anspruch 10, **dadurch gekennzeichnet,** daß die Rohdichte des Hartschaumkörpers ca. 30 kg/m$^3$ beträgt.

12. Sicherheitsbehältnis gemäß mindestens einem der Ansprüche 1 bis 11, **dadurch gekennzeichnet,** daß die Wandstärke der Bodenplatte (11) mindestens 20 mm beträgt.

13. Sicherheitsbehältnis gemäß mindestens einem der Ansprüche 1 bis 12, **dadurch gekennzeichnet,** daß die Wandstärke der Seitenwände (12, 13) mindestens 30 mm beträgt.

14. Sicherheitsbehältnis gemäß Anspruch 13, **dadurch gekennzeichnet,** daß die Wandstärke der Seitenwände (12, 13) in ihrem vorderen Bereich (12a, 13a), welcher dem Kopfbereich des Kleinkindes zugewandt ist, mindestens 40 mm beträgt.

15. Sicherheitsbehältnis gemäß Anspruch 6 oder Anspruch 6 und mindestens einem der Ansprüche 7 bis 14, **dadurch gekennzeichnet,** daß an der Unterseite der Bodenplatte (11) mindestens eine Verstärkungsplatte (24) vorgesehen ist, welche Öffnungen aufweist, die komplementär zu den Öffnungen (23, 24) zum Durchführen der Befestigungsbänder (25) des Brusttuches (22) angeordnet sind.

16. Sicherheitsbehältnis gemäß Anspruch 15, **dadurch gekennzeichnet,** daß zwei Verstärkungsplatten vorgesehen sind, welche sich im wesentlichen parallel zur Längsachse des Tragkörpers (10) erstrecken.

17. Sicherheitsbehältnis gemäß Anspruch 15 oder 16, **dadurch gekennzeichnet,** daß die Verstärkungsplatten aus Kunststoff bestehen.

EP 0 403 762 A1

FIG.1

EP 0 403 762 A1

FIG. 2

FIG. 3

FIG. 4

EP 0 403 762 A1

**FIG.5**

**FIG.6**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2303682 (WINGARD) <br> * Seite 3, Zeile 4 - Seite 3, Zeile 8; Figuren 1-2c * <br> --- | 1 | B60N2/28 |
| A | EP-A-186615 (BRECHER) <br> * Seite 5, Zeile 19 - Seite 5, Zeile 33; Figuren 1-4 * <br> --- | 1, 3 | |
| A | GB-A-1478323 (WINGARD) <br> * Spalte 2, Zeile 48 - Spalte 2, Zeile 85; Figuren 1-17 * <br> --- | 1 | |
| A | DE-A-3025846 (TAKATA) <br> * Seite 11, Zeile 14 - Seite 11, Zeile 30; Figuren 1-13 * <br> --- | 1 | |
| A | DE-A-3622226 (VITALONI) <br> * Spalte 5, Zeile 22 - Spalte 5, Zeile 31; Figuren 1-12 * <br> ------ | 1, 10 | |

**RECHERCHIERTE SACHGEBIETE (Int. Cl.5)**

A47D
B60N
B60R
B62B

Der vorliegende Recherchenbericht wurde für alle Patentansprüche erstellt

| Recherchenort | Abschlußdatum der Recherche | Prüfer |
|---|---|---|
| DEN HAAG | 29 AUGUST 1990 | HORVATH R. |